# FASCICULE DE BREVET EUROPEEN

(11) **EP 3 857 849 B1**
(45) Date de publication et mention de la délivrance du brevet: **17.09.2025**
(21) Numéro de dépôt: 19806015.4
(22) Date de dépôt: 26.09.2019
(51) Int. Cl.: H04L 47/10, H04L 9/40

(54) **PROCÉDÉS DE PROTECTION D'UN DOMAINE CLIENT, NOEUD CLIENT, SERVEUR ET PROGRAMMES D'ORDINATEUR CORRESPONDANTS**
VERFAHREN ZUM SCHUTZ EINER CLIENT-DOMÄNE, ENTSPRECHENDER CLIENT-KNOTEN, SERVER UND COMPUTERPROGRAMME
METHODS FOR PROTECTING A CLIENT DOMAIN, CORRESPONDING CLIENT NODE, SERVER AND COMPUTER PROGRAMS

(30) Priorité: 28.09.2018 FR 1859045
(43) Date de publication de la demande: 04.08.2021
(73) Titulaire: Orange, 92130 Issy-les-Moulineaux (FR)
(72) Inventeur: BOUCADAIR, Mohamed, 92326 Châtillon Cedex (FR); JACQUENET, Christian, 92326 Châtillon Cedex (FR)
(74) Mandataire: Vidon Brevets & Stratégie
(86) Numéro de dépôt international: PCT/FR2019/052281
(87) Numéro de publication internationale: WO 2020/065234

(56) Documents cités:
- CN-A- 101 141 304
- US-A1- 2016 241 445
- REDDY T ET AL: "Distributed Denial-of-Service Open Threat Signaling (DOTS) Signal Channel Specification; draft-ietf-dots-signal-channel-25.txt", DISTRIBUTED DENIAL-OF-SERVICE OPEN THREAT SIGNALING (DOTS) SIGNAL CHANNEL SPECIFICATION; DRAFT-IETF-DOTS-SIGNAL-CHANNEL-25.TXT; INTERNET-DRAFT: DOTS, INTERNET ENGINEERING TASK FORCE, IETF; STANDARDWORKINGDRAFT, INTERNET SOCIETY (ISOC) 4, RUE DES FALA, no. 25, 6 September 2018 (2018-09-06), pages 1 - 90, XP015128447
- BOUCADAIR M ET AL: "Distributed Denial-of-Service Open Threat Signaling (DOTS) Data Channel Specification; draft-ietf-dots-data-channel-21.txt", DISTRIBUTED DENIAL-OF-SERVICE OPEN THREAT SIGNALING (DOTS) DATA CHANNEL SPECIFICATION; DRAFT-IETF-DOTS-DATA-CHANNEL-21.TXT; INTERNET-DRAFT: DOTS, INTERNET ENGINEERING TASK FORCE, IETF; STANDARDWORKINGDRAFT, INTERNET SOCIETY (ISOC) 4, RUE DES FALAISES, no. 21, 10 September 2018 (2018-09-10), pages 1 - 68, XP015128486
- BOUCADAIR ORANGE T REDDY MCAFEE P PATIL CISCO M: "Distributed-Denial-of-Service Open Threat Signaling (DOTS) Server Discovery; draft-boucadair-dots-server-discovery-04.txt", DISTRIBUTED-DENIAL-OF-SERVICE OPEN THREAT SIGNALING (DOTS) SERVER DISCOVERY; DRAFT-BOUCADAIR-DOTS-SERVER-DISCOVERY-04.TXT; INTERNET-DRAFT: NETWORK WORKING GROUP, INTERNET ENGINEERING TASK FORCE, IETF; STANDARDWORKINGDRAFT, INTERNET SOCIETY (ISOC) 4,, no. 4, 9 April 2018 (2018-04-09), pages 1 - 25, XP015125879

## Description

### 1. Domaine de l'invention

Le domaine de l'invention est celui des communications au sein d'un réseau de communication, par exemple un réseau IP, et notamment celui des services IP à valeur ajoutée.

Plus précisément, l'invention offre une solution pour gérer le trafic associé à un domaine client, c'est-à-dire le trafic entrant dans un domaine client ou sortant d'un domaine client, même en cas de détection d'un conflit entre règles de gestion.

En particulier, l'invention offre une solution permettant à un nœud client de découvrir les autres nœuds clients au sein d'un domaine client, de détecter un conflit entre deux règles de gestion du trafic du réseau associées au domaine client, et d'engager une action de résolution de conflit exploitant les informations issues de la découverte.

L'invention trouve notamment des applications dans le domaine de la mitigation d'attaques par déni de services distribuées (en anglais DDoS, pour « Distributed Denial of Service »), mettant par exemple en œuvre, mais non exclusivement, une architecture de type DOTS (en anglais « DDoS Open Threat Signaling »), telle que normalisée par l'IETF.

### 2. Art antérieur et ses inconvénients

Pour rappel, une attaque DDoS est une tentative de rendre des ressources, par exemple des ressources réseau ou de calcul, indisponibles pour leurs utilisateurs. De telles attaques peuvent être massivement déployées en compromettant un grand nombre d'hôtes, et en utilisant ces hôtes pour amplifier les attaques.

Afin de pallier à ces attaques DDoS, des services de détection et de mitigation des attaques DDoS sont proposés par certains fournisseurs d'accès ou de services à leurs clients. De tels services de mitigation (en anglais DPS pour « DDoS Protection Services ») peuvent être hébergés au sein des infrastructures exploitées par les fournisseurs d'accès ou dans le « cloud » (en français « nuage »). Ils permettent notamment de distinguer le trafic « légitime », i.e., les données consenties par l'utilisateur, du trafic « suspect ».

Lorsqu'un service de type DPS est hébergé dans le « cloud », il est difficile d'identifier une attaque DDoS de façon anticipée, car un tel service n'est pas présent sur les chemins de routage (par défaut) permettant de joindre le réseau victime d'une attaque DDoS.

Pour résoudre ce problème, il a été notamment proposé de mettre en place des tunnels pour forcer le trafic (entrant ou sortant) sur un site ou un réseau destiné à être inspecté par le service DPS. Toutefois, cette approche augmente considérablement la latence observée par les utilisateurs et impose des contraintes de dimensionnement du service DPS pour être en mesure de traiter tout le trafic entrant ou sortant de tous les utilisateurs du réseau. En outre, lesdits tunnels sont considérés comme des vecteurs d'attaque potentiels.

Lorsqu'un service de type DPS est hébergé au sein d'une infrastructure exploitée par un fournisseur d'accès, même si le service DPS est présent sur le chemin de routage du trafic entrant ou sortant d'un réseau, des difficultés peuvent survenir pour l'identification du trafic suspect. Notamment, avec l'augmentation du trafic chiffré, transporté en particulier sur UDP (par exemple, le trafic QUIC, pour « Quick UDP Internet Connection » en anglais), il est difficile de distinguer le trafic légitime du trafic suspect. La difficulté d'accéder en clair aux messages de contrôle, tels que les messages « SYN/SYN-ACK/ACK » prévus dans le protocole TCP, peut en effet rendre complexe la vérification du consentement d'un nœud du réseau à recevoir du trafic.

Afin d'aider à l'identification du trafic suspect, une architecture spécifique est en cours de normalisation au sein de l'IETF. Une telle architecture, appelée DOTS, permet à un nœud client, dit client DOTS, d'informer un serveur, dit serveur DOTS, qu'il a détecté une attaque DDoS et que des actions appropriées sont requises.

Lorsqu'un domaine client est la cible d'une attaque DDoS, un client DOTS faisant partie de ce domaine client peut envoyer un message au serveur DOTS pour demander de l'aide. Ce dernier coordonne, avec une entité de mitigation (en anglais « mitigator »), les actions à effectuer pour que le trafic suspect, associé à l'attaque de déni de service, ne soit plus acheminé vers le domaine client, alors que le trafic légitime continue d'être acheminé normalement vers le domaine client.

L'architecture DOTS repose sur l'utilisation de deux canaux de communication entre un client DOTS et un serveur DOTS :
- un canal de signalisation DOTS (en anglais « DOTS Signal Channel »), et
- un canal de données DOTS (en anglais « DOTS Data Channel »).

Le canal de signalisation DOTS est uniquement utilisé quand une attaque DDoS est en cours. Ainsi, un client DOTS peut utiliser ce canal pour demander de l'aide auprès du serveur DOTS. Par exemple, un client DOTS utilise le canal de signalisation pour envoyer une requête au serveur l'informant que le préfixe « 1.2.3.0/24 » subit une attaque DDoS, afin que le serveur puisse engager des actions pour mettre fin à l'attaque. Une telle requête est associée à un client DOTS identifié par un identifiant unique, noté par exemple CUID (« Client Unique IDentifier »).

Un serveur DOTS peut ainsi prendre les mesures adéquates pour mettre fin à une attaque DDoS d'une part si la requête émanant du client DOTS n'est pas en conflit avec d'autres demandes émanant d'autres clients faisant partie du même domaine client, ou avec une règle de filtrage installée préalablement par le serveur à la requête d'un autre client du même domaine client, et d'autre part si le serveur est habilité à/configuré pour honorer la dernière requête reçue. En cas de conflit, le serveur peut envoyer un message d'erreur, par exemple de type 4.09 (« Conflict »), pour informer le client.

Un tel canal de signalisation est notamment décrit dans le document « Distributed Denial-of-Service Open Threat Signaling (DOTS) Signal Channel Specification », draft-ietf-dots-signal-channel, Reddy, T. et al., janvier 2018.

Le canal de données DOTS est quant à lui utilisé lorsqu'aucune attaque DDoS n'est détectée par un client DOTS. Par exemple, un client DOTS peut utiliser ce canal pour installer des règles de filtrage, telles que le filtrage du trafic reçu de certaines adresses ou celui destiné à un nœud donné, ou pour demander au serveur de bloquer tout le trafic à destination du préfixe « 1.2.3.0/24 » ou encore tout le trafic selon le protocole de communication UDP (pour « User Datagram Protocol », en anglais) à destination du port 443, couramment utilisé pour les attaques de déni de service.

Le serveur DOTS peut procéder à l'installation de règles de filtrage en réponse à une demande envoyée par un client, si cette demande n'est pas en conflit avec d'autres demandes provenant d'autres clients du même domaine client ou avec une règle de filtrage existante. En cas de conflit avec d'autres règles maintenues par le serveur DOTS, le serveur peut envoyer un message d'erreur, par exemple de type 409 (« Conflict »), pour informer le client.

Un tel canal de données est notamment décrit dans le document « Distributed Denial-of-Service Open Threat Signaling (DOTS) Data Channel », draft-ietf-dots-data-channel, Boucadair, M. et al., décembre 2017.

Selon la procédure décrite dans les deux documents précités, il existe un risque qu'un serveur DOTS refuse de traiter une demande de mitigation d'attaque émise par un client DOTS alors que l'attaque est réelle, ou refuse des demandes de filtrage émises par un client DOTS (un objectif des demandes de filtrage étant d'anticiper des attaques DDoS). Un tel refus peut notamment survenir lorsque des clients DOTS d'un même domaine client ont préalablement demandé au serveur d'installer des règles de filtrage, mais que ces règles ne sont désormais plus justifiées, car périmées (en anglais « stale »). Il peut s'agir par exemple d'un client DOTS qui ne supprime pas les règles de filtrage qui ont été installées à sa requête avant de se déconnecter.

Or la suppression de ces règles par un autre client du même domaine est impossible et le client à l'origine de la demande de mitigation d'attaque ne dispose d'aucune information concernant l'identité du client qui a installé ces règles.

Par ailleurs, en cas d'inactivité d'un client DOTS ou lorsque celui-ci se déconnecte, un serveur DOTS peut procéder à la suppression de l'ensemble des filtres activés par ce client, ce qui peut nuire au bon acheminement du trafic associé au domaine client dans lequel ledit client se trouvait, d'autant plus que les autres clients du domaine n'ont pas connaissance de l'existence de ces filtres et ne peuvent donc pas maintenir ou supprimer les états correspondant à ces filtres.

Il existe donc un besoin pour une nouvelle technique de gestion du trafic associé à un domaine client, permettant par exemple d'améliorer la connaissance mutuelle des clients DOTS d'un même domaine et, par conséquent, d'améliorer la coordination de leurs actions de gestion du trafic.

### 3. Exposé de l'invention

L'invention répond à ce besoin en proposant une solution nouvelle pour la protection d'un domaine client, par exemple contre une attaque informatique, mis en œuvre dans un nœud client du domaine client, ledit procédé comprenant :
- la découverte d'au moins un autre nœud client dudit domaine client, dit nœud découvert ;
- la détection d'un conflit entre au moins deux règles de gestion du trafic associé audit domaine client ; et
- la résolution du conflit détecté, comprenant :
   o si une desdites règles a été installée par le nœud découvert, la modification de ladite règle ou d'un état associé audit nœud découvert ;
   o sinon, l'obtention, en provenance dudit nœud découvert, d'une information d'identification d'au moins le nœud du domaine client qui a installé une desdites règles.

L'invention repose sur la découverte par un premier nœud client des autres nœuds clients du domaine et sur l'exploitation des informations obtenues lors de cette découverte pour détecter un conflit entre règles de gestion ou résoudre le conflit.

La découverte peut être réalisée sur la base d'informations transmises spontanément par les autres clients du domaine ou en réponse à une requête. La phase de découverte peut avoir lieu avant ou après l'identification du conflit.

On entend par règle de gestion du trafic toute action de filtrage du trafic, ainsi que l'ensemble des règles d'administration liées à la politique de sécurité du domaine. Avantageusement, une règle de filtrage peut être installée suite à la détection d'une attaque du réseau, pour protéger le domaine client.

On considère qu'il y a conflit entre deux règles de gestion du trafic du domaine client dès lors qu'elles sont incompatibles entre elles, c'est-à-dire que l'une empêche la bonne réalisation de l'autre ou le respect de la politique de sécurité. Un tel conflit peut être détecté indépendamment de la découverte ou à partir des informations résultant de la découverte.

Selon un mode de réalisation de l'invention, la découverte comprend l'émission d'au moins une requête de découverte et la réception d'une réponse.

Un avantage est que le premier client nœud déclenche la découverte quand il en a besoin.

Selon un autre mode de réalisation de l'invention, la requête est transmise à un serveur accessible par les clients nœuds du domaine.

Avantageusement, la méthode de découverte des autres nœuds client dudit domaine client repose sur l'assistance dudit serveur. Un avantage est que le serveur connaît tous les nœuds clients actifs dans le domaine client.

Optionnellement, le premier nœud client peut préciser un type d'information requis, par exemple dans un champ d'information dit « code de requête » et obtenir une réponse ciblée. Par exemple, si le code de requête prend la valeur 0, le nœud client souhaite recevoir l'identification des nœuds clients pour lesquels le serveur maintient une session active ou au moins une entrée correspondant à une règle de gestion du trafic.

Avantageusement, le type d'information requis appartient à un groupe comprenant au moins :
- un identifiant du nœud client ;
- une adresse IP du nœud client ;
- une session active maintenue par le serveur ;
- une entrée maintenue par le serveur correspondant à une règle de gestion installée par le client ;

Si tous les nœuds clients du domaine client jouent le même rôle et bénéficient des mêmes privilèges, alors n'importe quel nœud client peut accéder à toutes les informations disponibles telles que connues et maintenues par le serveur. Si au contraire, les nœuds client dudit domaine client assurent des rôles distincts et bénéficient de privilèges différents en termes de types d'information accessibles, alors la réponse transmise par le serveur ne contiendra que les valeurs d'informations correspondant aux types requis accessibles.

Avantageusement, la réponse obtenue a un type appartenant au groupe comprenant au moins :
- une réponse dite compacte, comprenant un champ d'information, dit code de réponse, indiquant un nombre de nœuds clients actifs répondant au code de requête ;
- une réponse dite élaborée, comprenant une liste des nœuds clients répondant au code de requête, ainsi que les valeurs des types d'information requis pour chaque client de ladite liste.

Selon une stratégie, la réponse reçue par défaut du serveur est une réponse compacte. En fonction du code de réponse reçu, et en particulier si la réponse indique la présence d'autres nœuds client, le premier nœud client pourra émettre une deuxième requête de découverte, par exemple à destination des autres nœuds clients du domaine client, en vue d'obtenir une réponse élaborée.

Avantageusement, le serveur contrôle les informations qu'il retourne au nœud client, indépendamment du code de requête. Par exemple, seuls les nœuds clients bénéficiant de privilèges, comme les nœuds maîtres, reçoivent la réponse élaborée. Un avantage est de limiter la diffusion d'informations sensibles telles que l'identification des clients ou leurs adresses IP et ainsi d'éviter la récupération de ces informations par des clients malveillants.

Selon un autre mode de réalisation de l'invention, la découverte comprend la réception d'annonces de présence en provenance du nœud découvert sur une adresse multicast.
Ainsi, la découverte se fait entre nœuds clients du domaine client par un mécanisme d'annonce de présence. Un avantage est que la découverte s'appuie sur des informations diffusées spontanément par les autres nœuds du domaine.

Selon un autre mode de réalisation de l'invention, la requête de découverte est transmise à destination d'une adresse multicast ou d'un client préconfiguré et les annonces de présence sont reçues en réponse à ladite requête.

Un avantage de recourir à une adresse multicast ou à l'adresse d'un client préconfiguré, tel qu'un client maître pour demander aux autres clients du domaine de s'annoncer est d'éviter que des clients malveillants n'envoient des réponses erronées au client demandeur en unicast.

Ce mode de réalisation (découverte intra domaine) peut avantageusement se combiner au précédent (découverte assistée par le serveur) pour permettre au premier client de compléter les informations obtenues. Par exemple, si le serveur ne lui a fourni qu'une réponse compacte, il peut ensuite déclencher une deuxième découverte par résolution de nom de domaine afin d'obtenir des informations d'identification et de localisation des autres clients du domaine.

En particulier, selon un mode de réalisation de l'invention, l'adresse multicast est associée à un sous-ensemble des nœuds clients, dits clients maîtres, et, sur réception d'au moins une annonce de présence en provenance d'un nœud client maître dudit domaine, comprenant au moins une adresse IP unicast du nœud maître, le procédé comprend l'envoi d'une deuxième requête de découverte des nœuds clients du domaine client à ladite au moins une adresse IP unicast du nœud client maître.

Selon cette variante, lorsque le domaine distingue des nœuds maîtres des nœuds clients classiques, la découverte intra domaine est réalisée en deux temps : d'abord la découverte d'au moins un nœud maître et l'obtention d'une adresse unicast de ce nœud, puis la récupération des informations relatives aux nœuds clients non maîtres du domaine qui sont connus du nœud maître. Avantageusement, le nœud maître a découvert au préalable les nœuds clients associés au domaine en interrogeant le serveur et a obtenu des réponses complètes. Il est donc en mesure de répondre à la requête de découverte du premier nœud client.

Un avantage de cette solution est qu'elle est sécurisée, du fait que le nœud client maître dispose d'une visibilité complète des clients du domaine et qu'il a préalablement obtenu du serveur la liste des nœuds clients dûment enregistrés par le serveur. Il peut ainsi rejeter les requêtes de découvertes émanant de nœuds malveillants.

Selon un mode de réalisation de l'invention, les informations obtenues lors de la découverte comprenant une liste de nœuds découverts et des informations relatives aux règles de gestion installées par les nœuds de la liste, la détection du conflit comprend la comparaison des informations obtenues avec des informations disponibles localement et l'identification dans ladite liste d'au moins le nœud découvert qui a installé une desdites règles.

Un avantage de la découverte selon l'invention est qu'elle permet au premier nœud client de confronter les informations récupérées lors de la découverte avec des informations dont il disposait déjà, et donc de détecter l'existence du conflit. Si les informations obtenues sont suffisamment complètes, elles permettent de détecter un conflit et d'associer la ou les règles qui posent problème à des clients identifiés lors de la découverte.

Avantageusement, le conflit de gestion de trafic détecté met en évidence :
- la présence d'au moins un nœud client inactif ou malveillant, qui a installé une deuxième règle de gestion du trafic en conflit avec une règle de la politique d'administration ou de sécurité du domaine. Par exemple, la deuxième règle est périmée ;
- l'existence d'un conflit entre une première règle que le premier nœud client demande au serveur d'installer et une deuxième règle déjà installée, associée à un client découvert.

Selon un autre mode de réalisation de l'invention, la modification de ladite règle ou d'un état associé audit nœud découvert comprend l'envoi à un serveur d'une demande de modification de ladite règle ou d'un état associé audit nœud découvert.

Ce mode de réalisation concerne particulièrement un client maître qui possède le privilège de modifier un état d'un client. Par exemple, il peut demander au serveur de modifier la règle qui pose problème ou même de déconnecter le client s'il le considère comme malveillant. Selon encore un autre mode de réalisation de l'invention, la détection du conflit comprend la réception d'un message de rejet d'une demande d'installation d'une desdites règles en provenance d'un serveur de gestion du trafic associé au domaine client, ledit message comprenant un identifiant de l'autre dite règle de gestion.
Un avantage est que le nœud client peut exploiter les informations obtenues de la découverte pour identifier le client qui a installé la règle en conflit avec celle qu'il souhaite installer.

Selon encore un autre mode de réalisation de l'invention, si l'autre dite règle n'a pas été installée par le nœud découvert, la résolution du conflit comprend l'émission d'une requête de détermination d'une identité du nœud client associé à l'autre dite règle de gestion à destination dudit nœud découvert.

Avantageusement, lorsque la découverte n'a pas permis au premier nœud client d'obtenir suffisamment d'informations sur les autres nœuds du domaine pour identifier localement le nœud qui a installé la règle générant le conflit, le client demande l'assistance d'au moins un des nœuds découverts. Avantageusement, il envoie la requête à l'ensemble des nœuds découverts. Une fois qu'il a récupéré l'adresse IP du nœud client associé, il peut s'adresser à lui pour lui demander d'ajuster sa règle.

Selon un autre mode de réalisation de l'invention, si l'autre dite règle a été installée par le nœud découvert, la modification de ladite règle comprend l'envoi au nœud découvert d'une demande d'ajustement de ladite règle.

Ce mode de réalisation est particulièrement adapté à un nœud client classique. Le fait d'associer un client à la règle qui pose problème lui permet de demander directement assistance à ce nœud pour la résolution du conflit.

Corrélativement l'invention concerne aussi un procédé de protection d'un domaine client, par exemple contre une attaque informatique, mis en œuvre dans un serveur ou un nœud client, ledit procédé comprenant :
- la réception d'une requête de découverte en provenance d'un nœud client du domaine client ;
- l'obtention d'un enregistrement comprenant au moins un état associé à un autre nœud client du domaine, dit nœud enregistré ; et
- l'envoi d'une réponse au nœud client comprenant au moins une information relative au nœud enregistré.

Selon l'invention, le serveur ou le nœud client répond à la requête de découverte du premier nœud client du domaine en lui transmettant des informations sur les autres nœuds clients du domaine.

L'invention concerne également un nœud client adapté pour mettre en œuvre un ou plusieurs procédés de protection d'un domaine client, par exemple contre une attaque informatique, selon l'un quelconque des modes particuliers de réalisation définis ci-dessus. Ce nœud client pourra bien sûr comporter les différentes caractéristiques relatives au procédé de protection selon l'invention. Ainsi, les caractéristiques et avantages de ce nœud client sont les mêmes que ceux du procédé de protection, et ne sont pas détaillés plus amplement.

L'invention concerne également un serveur comprenant au moins une machine de calcul programmable ou une machine de calcul dédiée, configurée par exemple pour la protection d'un domaine client contre une attaque informatique, et mettant en œuvre :
- la réception d'une requête de découverte en provenance d'un nœud client du domaine client ;
- l'obtention d'un enregistrement comprenant au moins un état associé à un autre nœud client du domaine, dit nœud enregistré ; et
- l'envoi d'une réponse au nœud client comprenant au moins une information relative au nœud enregistré.

Selon un mode particulier de réalisation l'invention concerne également un ou plusieurs programme d'ordinateurs comportant des instructions pour la mise en œuvre d'un procédé de protection d'un domaine client, par exemple contre une attaque informatique, selon l'un quelconque des modes particuliers de réalisation décrits précédemment, lorsque ledit programme est exécuté par un processeur. Un tel programme peut utiliser n'importe quel langage de programmation. Il peut être téléchargé depuis un réseau de communication et/ou enregistré sur un support lisible par ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur. D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 illustre un exemple de réseau de communication mettant en œuvre un procédé de protection, selon un mode de réalisation de l'invention ;
- la figure 2 présente les principales étapes du procédé de protection, selon au moins un mode de réalisation de l'invention ;
- les figures 3A à 3C illustrent la découverte des nœuds clients d'un domaine client par un premier nœud selon un premier mode de réalisation de l'invention ;
- les figures 4A et 4B illustrent la découverte des nœuds clients d'un domaine client par un premier nœud selon un deuxième mode de réalisation de l'invention ;
- la figure 5 illustre la détection d'un conflit entre deux règles de gestion du trafic selon un troisième mode de réalisation de l'invention ;
- la figure 6 illustre la détection d'un conflit entre deux règles de gestion du trafic selon un quatrième mode de réalisation de l'invention ;
- les figures 7A à 7C illustrent différentes variantes de résolution de conflit selon le troisième mode de réalisation de l'invention ;
- les figures 8A à 8C illustrent différentes variantes mises en œuvre par un nœud client pour associer une règle de gestion à un nœud client découvert ;
- les figures 9A et 9B illustrent deux variantes de résolution de conflit selon le quatrième mode de réalisation de l'invention ; et
- les figures 10 et 11 présentent les structures simplifiées d'un nœud client et d'un serveur selon un mode de réalisation particulier.

### 5. Description détaillée de modes de réalisation de l'invention

### 5.1 Principe général

Le principe général de l'invention repose sur la découverte par un premier nœud client appartenant à un domaine client d'autres nœuds clients appartenant au même domaine client, la détection d'un conflit entre deux règles de gestion du trafic associé au domaine client, l'association d'au moins une desdites règles à un nœud client du domaine client et l'engagement d'une action de résolution du conflit détecté par modification de ladite règle et/ou d'un état du client, au moins la détection ou la résolution du conflit mettant en œuvre les informations acquises au cours du processus de découverte des nœuds du domaine.

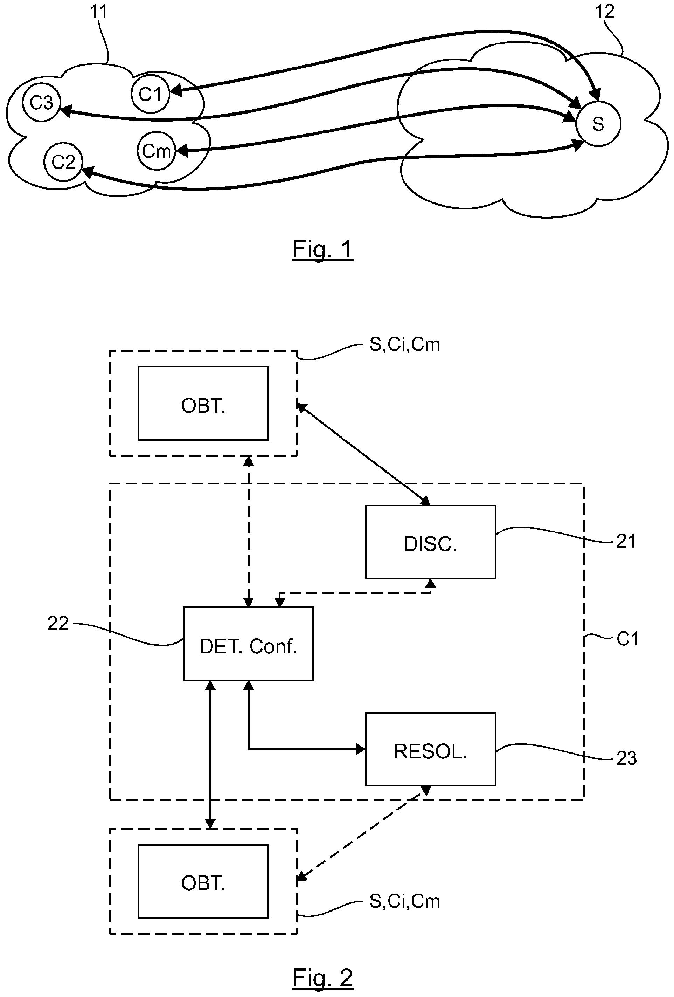

On présente, en relation avec la figure 1, différents équipements d'un réseau de communication mettant en œuvre un procédé de protection d'un réseau selon un mode de réalisation de l'invention.

On considère par exemple plusieurs nœuds clients C1, C2, C3 et Cm appartenant à un domaine client 11, communiquant avec un serveur S. Par exemple, le domaine client 11 comprend une ou plusieurs machines, encore appelées nœuds. On entend ici par « domaine » un ensemble de machines ou nœuds placés sous la responsabilité d'une même entité.

Selon l'exemple illustré, le serveur S n'appartient pas au domaine client 11. Selon un autre exemple, non illustré, le serveur S peut appartenir au domaine client 11.

On décrit ci-après des exemples de mise en œuvre de l'invention dans une architecture de type DOTS, selon laquelle les nœuds clients C1, C2, C3 et Cm sont des clients DOTS et le serveur S est un serveur DOTS. Les nœuds clients C1, C2, C3, Cm et le serveur S peuvent ainsi communiquer via les canaux de signalisation et de données DOTS définis en relation avec l'art antérieur, pour informer le serveur que des actions de protection sont requises (comme par exemple, la mitigation d'attaques ou l'installation de règles de filtrage).

### 5.2 Rappels sur l'architecture DOTS

Une requête DOTS peut être, par exemple :
- un message de gestion d'alias, par exemple destiné à associer un identifiant avec une ou plusieurs ressources réseau située(s) dans le domaine du client,
- un message de signalisation pour solliciter la mitigation d'une attaque de déni de service auprès d'un serveur DOTS, le serveur pouvant, sur réception d'un tel message, déclencher les actions nécessaires pour mettre fin à l'attaque, ou
- un message de gestion de règles de filtrage, tel que la sollicitation d'un serveur DOTS pour qu'il installe (ou fasse installer) une liste de contrôle d'accès (ACL pour « Access Control List »).

Une requête DOTS peut être envoyée d'un client DOTS, appartenant à un domaine client DOTS, à un serveur DOTS ou à une pluralité de serveurs DOTS.

Un domaine DOTS peut accueillir un ou plusieurs clients DOTS. En d'autres termes, plusieurs nœuds client d'un domaine client peuvent disposer de fonctions DOTS.

Les communications DOTS entre un domaine client et un serveur peuvent être directes, ou établies via des passerelles DOTS (en anglais « DOTS gateways »). Ces passerelles peuvent être hébergées au sein du domaine client, du domaine du serveur, ou des deux. En d'autres termes, un nœud du domaine client peut communiquer directement avec le serveur, ou transmettre une requête à une passerelle du domaine client qui communique directement avec le serveur ou avec une passerelle du domaine serveur, ou transmettre une requête à une passerelle du domaine serveur qui communique avec le serveur.

Une passerelle DOTS localisée dans un domaine client est considérée par un serveur DOTS comme un client DOTS.

Une passerelle DOTS localisée dans un domaine serveur est considérée par un client DOTS comme un serveur DOTS. En cas de présence d'une passerelle DOTS dans un domaine serveur, l'authentification des clients DOTS peut être confiée à la passerelle DOTS du domaine serveur. Un serveur DOTS peut être configuré avec la liste des passerelles DOTS actives au sein de son domaine et le serveur peut déléguer certaines de ses fonctions à ces passerelles de confiance. En particulier, le serveur peut utiliser en toute sécurité les informations fournies par une passerelle figurant dans une liste déclarée auprès du serveur et maintenue par celui-ci, moyennant une procédure d'authentification *ad hoc* (par exemple, configuration explicite de la liste par l'administrateur habilité du serveur, récupération de la liste auprès d'un serveur d'authentification tel qu'un serveur AAA (pour « Authentication, Authorization and Accounting »), etc.).

Les modes de réalisation présentés ci-après peuvent être mis en œuvre quelle que soit la configuration de l'architecture DOTS (un ou plusieurs clients DOTS dans un domaine client, pas de passerelle DOTS, une ou plusieurs passerelles DOTS dans le domaine client ou dans le domaine serveur, domaine client distinct du domaine serveur, etc.).

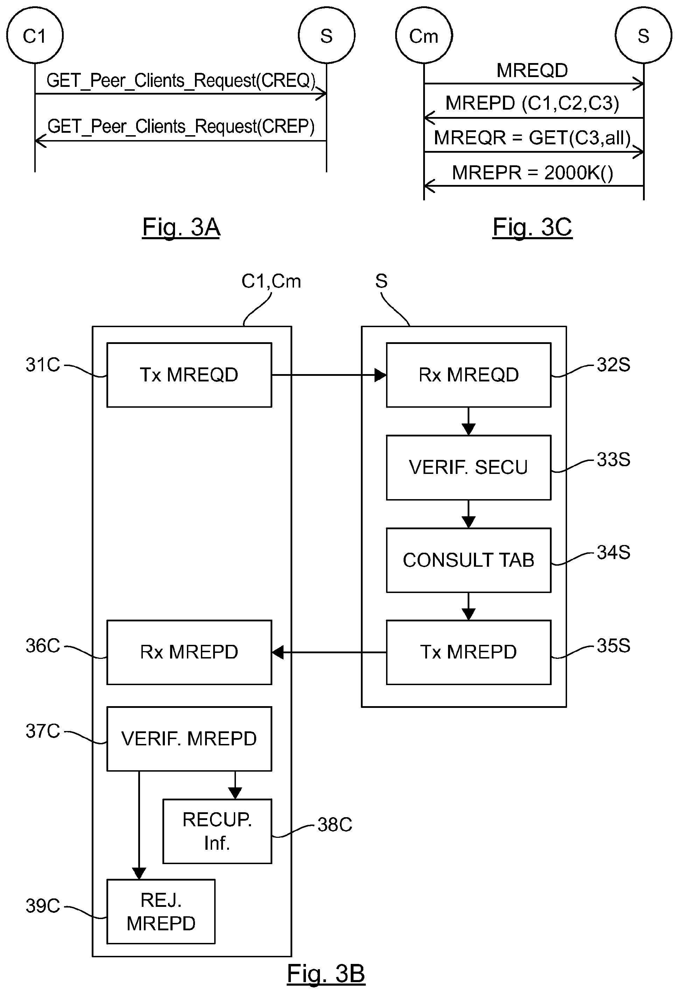

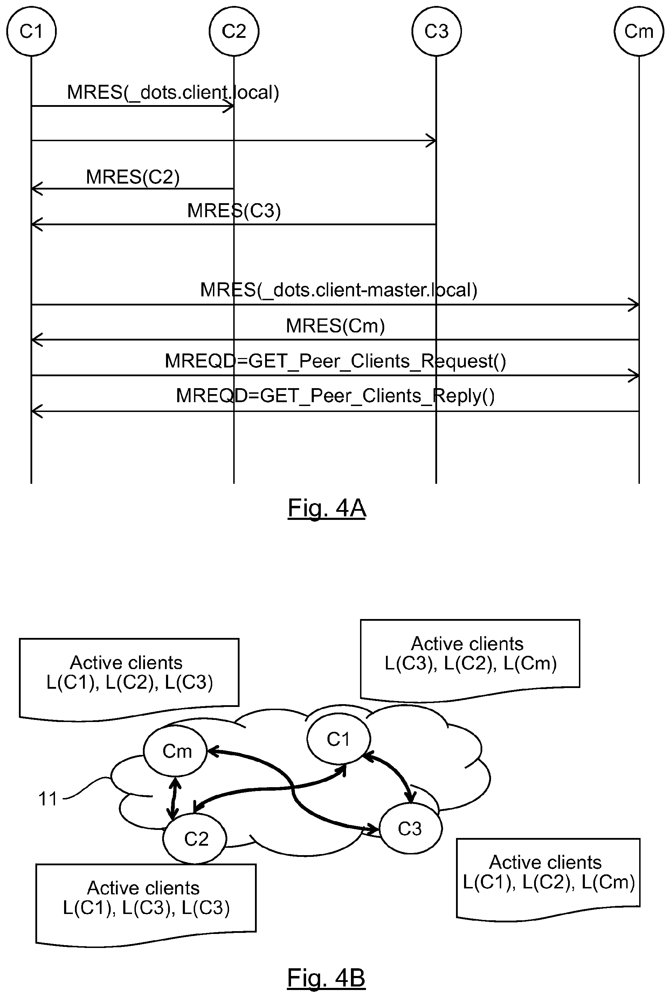

La figure 2 illustre les principales étapes mises en œuvre par un des nœuds clients, par exemple le nœud client C1 pour la gestion du trafic associé au domaine client 11.
Le nœud client C1 découvre en 21 d'autres nœuds clients actifs dans le domaine client 11 dont il fait partie. Cette découverte lui permet d'obtenir des informations relatives aux nœuds clients actifs dans le domaine. Elle fait intervenir le serveur S ou un ou plusieurs nœuds clients du domaine. Plusieurs exemples de réalisation vont être détaillés dans la suite de la description, en relation avec les Figures 3A à 3C et 4A-4B.

En 22, il détecte un conflit relatif à deux règles de gestion Rk1 et Rk2. La détection du conflit peut être liée ou non aux informations acquises au cours du processus de découverte des autres nœuds clients du domaine.

Dans la suite, on désigne par règle de gestion, toute action mise en œuvre par un nœud client du domaine client pour gérer le trafic entrant ou sortant de ce domaine. Il peut s'agir par exemple d'une règle de filtrage, d'une action de mitigation nécessitant l'installation d'une ou plusieurs règles de filtrage ou de toute autre ressource. L'installation d'une telles règle de gestion conduit à la création d'une entrée (pour « state entry», en anglais) ou, autrement dit, d'un enregistrement dans une base de données maintenue par le serveur. Une telle entrée décrit la règle de gestion et son statut, et elle est associée au nœud client à l'origine de la requête d'installation de la règle. Par ailleurs, on désigne par état d'un nœud client enregistré auprès du serveur S, son activité dans le réseau, comme par exemple le fait que le serveur maintienne ou non pour ce nœud client une session active dans le réseau ou au moins une entrée relative à une règle de gestion du trafic installée par le nœud client.

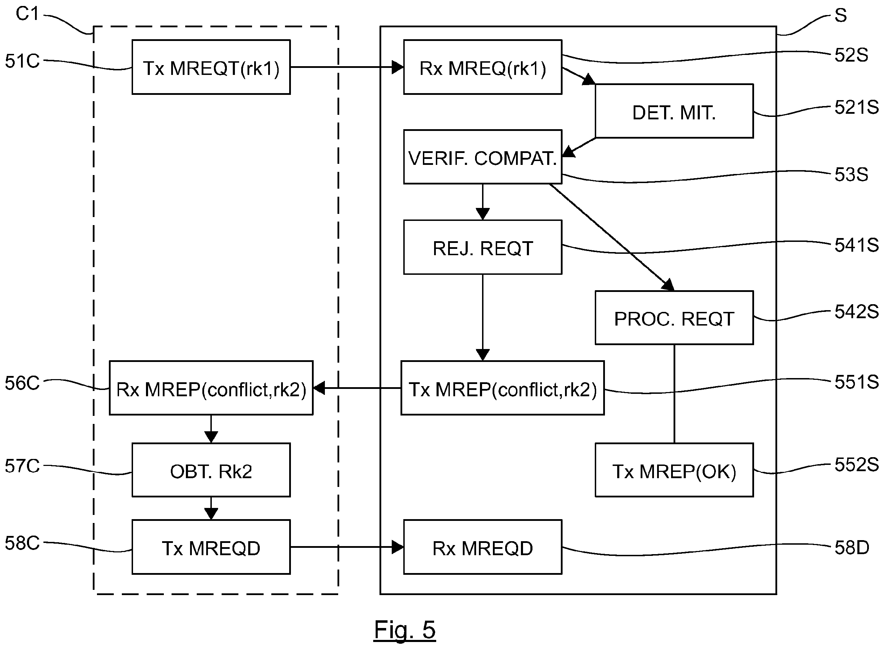

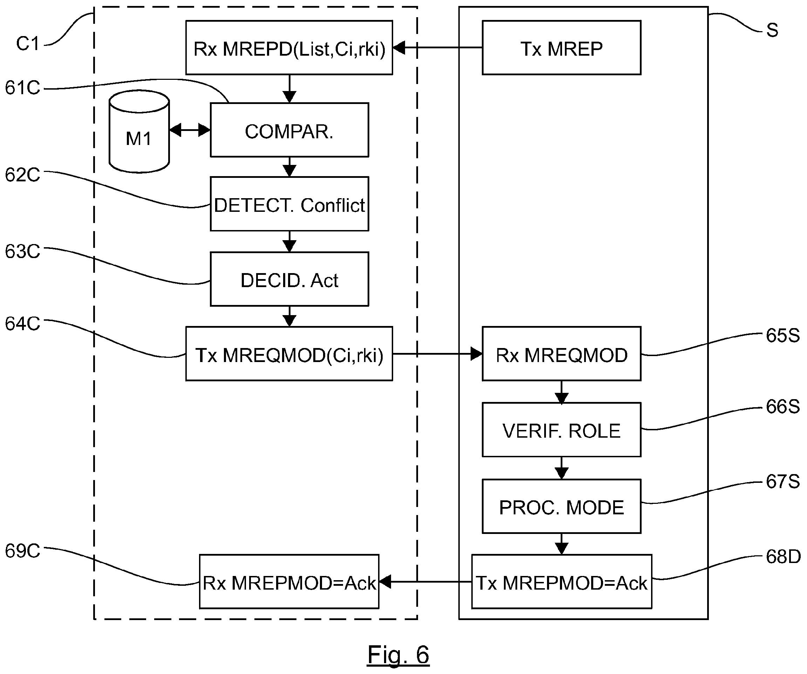

Différents exemples de réalisation seront détaillés en relation avec les Figures 5 et 6.

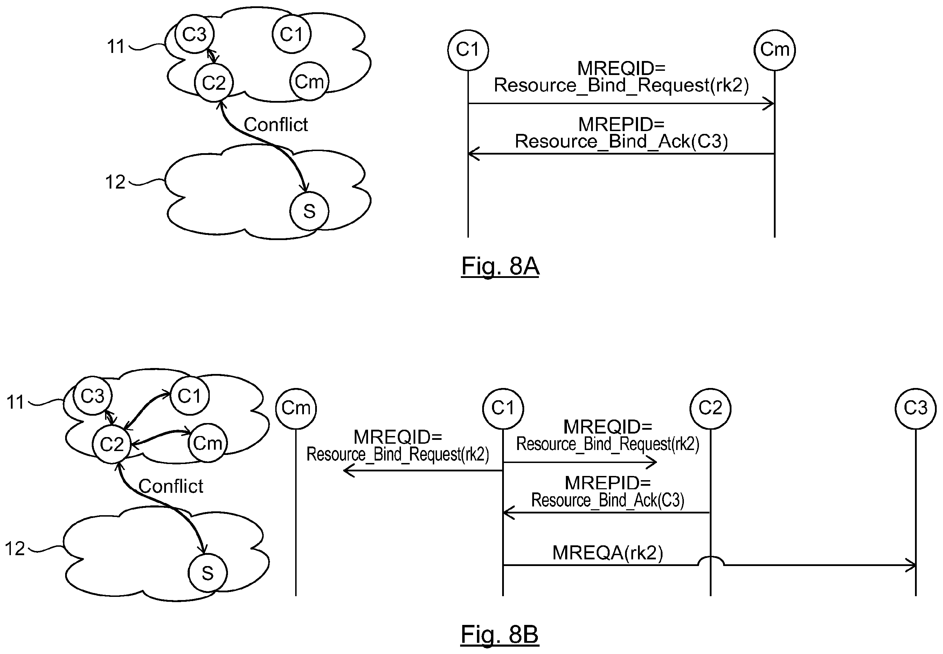

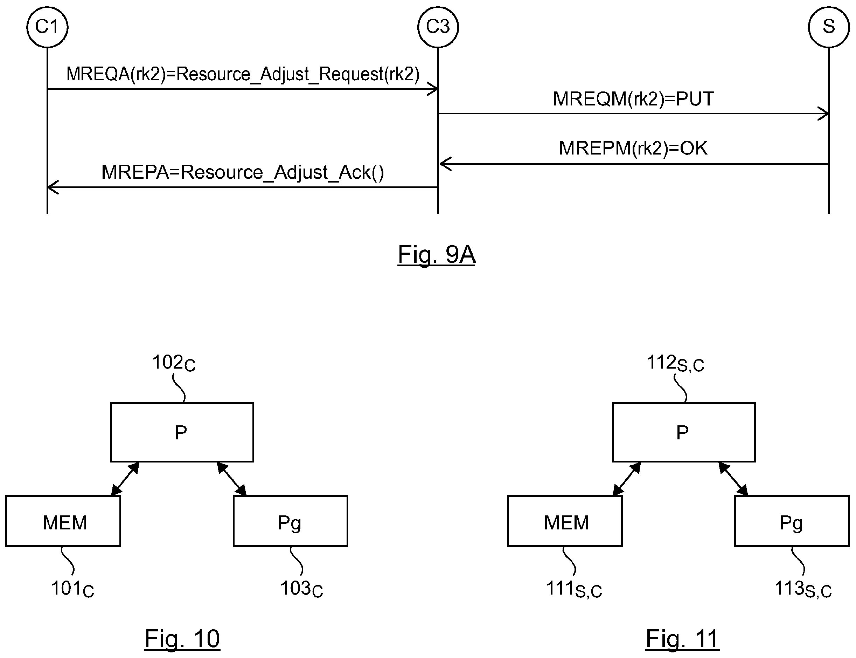

Optionnellement, le nœud client C1 associe au moins une des règles de gestion Rk1, Rk2 à un client découvert. Des exemples de réalisation seront détaillés en relation avec les figures 8A -8D et 9A-9B.

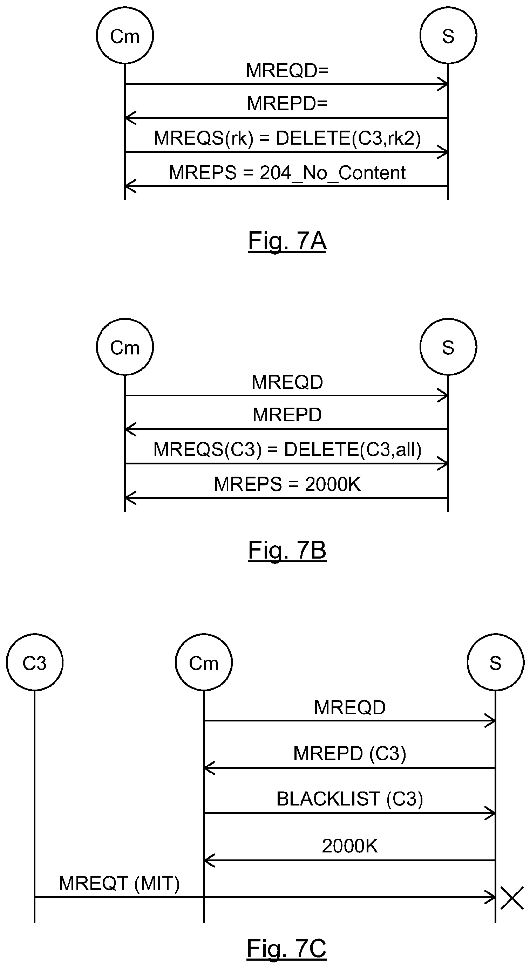

En 23, le nœud client C1 engage une action de résolution de ce conflit, auprès d'au moins un autre nœud client C2 qu'il a découvert ou du serveur S. L'action de résolution peut soit s'appliquer à un état du nœud client C2 proprement dit, lorsqu'il est à l'origine de l'installation de la règle de gestion Rk2 qui pose problème, soit consister à solliciter son assistance. Différents modes de réalisation seront détaillés en relation avec les Figures 7A-7C et 9A-9B.

En relation avec les Figures 3A-3B, on détaille maintenant l'étape de découverte d'autres nœuds clients selon un premier mode de réalisation de l'invention, qui requiert l'assistance du serveur S12. Selon ce mode de réalisation de l'invention, appelé mode « server-assisted », la découverte comprend, comme illustré par la Figure 3A, l'émission par le client C1 en 31C d'une requête de découverte MREQD ou « GET_Peer_Clients_Request » à destination du serveur S12 en vue de récupérer une liste des clients DOTS du domaine ayant au moins un état instancié par le serveur S. Cette requête peut être transmise lors de l'initialisation, ou à fréquence régulière, ou encore à n'importe quel moment, par exemple suite à la détection d'un conflit.

Avantageusement cette requête comprend un champ, dit code de requête CREQ, qui peut prendre une des valeurs suivantes :
- « 0 » pour obtenir la liste de tous les nœuds clients DOTS appartenant au même domaine que le nœud client C1 pour lesquels le serveur DOTS S maintient une session active ou au moins un état, tel qu'une règle de filtrage ;
- « 1 » pour obtenir la liste de tous les nœuds clients DOTS appartenant au même domaine que le nœud client C1 pour lesquels le serveur DOTS S maintient une session active ;
- « 2 » pour obtenir la liste de tous les nœuds clients DOTS appartenant au même domaine que le nœud client C1 pour lesquels le serveur DOTS S maintient au moins un état, tel qu'une règle de filtrage ;
- « 3 » pour obtenir la liste de tous les nœuds clients DOTS appartenant au même domaine ayant établi un contact avec le serveur depuis l'horodatage indiqué par le champ « timestamp ».

En relation avec la Figure 3B, dès réception 32S de la requête MREQD émise par le nœud client C1, le serveur S procède en 33S à des vérifications de sécurité. On suppose en effet que les agents DOTS (client et serveur) s'authentifient mutuellement. Il existe donc un canal de communication sécurisé par exemple de type DTLS ou TLS (pour « (Datagram) Transport Layer Security », en anglais) entre un client et un serveur. Ainsi, les messages reçus d'un autre serveur usurpant l'identité du serveur légitime peuvent être rejetés par un client DOTS. De la même manière, les demandes des clients DOTS non autorisés à accéder au service de mitigation peuvent être ignorées par le serveur DOTS. On suppose dans la suite que cette procédure est mise en place par les agents DOTS. Les détails des échanges DTLS/TLS et ceux concernant la gestion des clés de sécurité pour l'authentification mutuelle des clients DOTS, ne font pas l'objet de la présente invention et ne sont pas détaillés ici.

Ensuite, le serveur S12 consulte en 34S une ou plusieurs tables stockées en mémoire en appliquant un filtre de recherche correspondant au « code de requête ».

A titre d'exemple, un serveur DOTS identifie les clients DOTS appartenant à un même domaine par une information d'identification de domaine appelée attribut CDID (en anglais « Client Domain IDentifier »). Bien sûr, d'autres mécanismes peuvent être supportés par le serveur. De façon alternative, l'identifiant de domaine peut être calculé localement par le serveur à partir d'informations d'identité de type certificat ou clé, telle que l'information « Pre-shared Key (PSK) identity », et/ou communiqué par une autre entité de confiance (typiquement, un relais DOTS de son domaine). Aucune hypothèse n'est faite quant à la structure de l'identifiant du domaine.

A titre d'exemple, on présente ci-après, un exemple de message relayé par un relais DOTS du domaine serveur. Ledit relais insère l'information "cdid=here.example" pour communiquer au serveur l'identité du domaine du client DOTS qui lui a transmis une requête de découverte. Cette information est utilisée par le serveur pour l'application de politiques telles que l'application de quota ou la limitation du nombre de requêtes par domaine client.

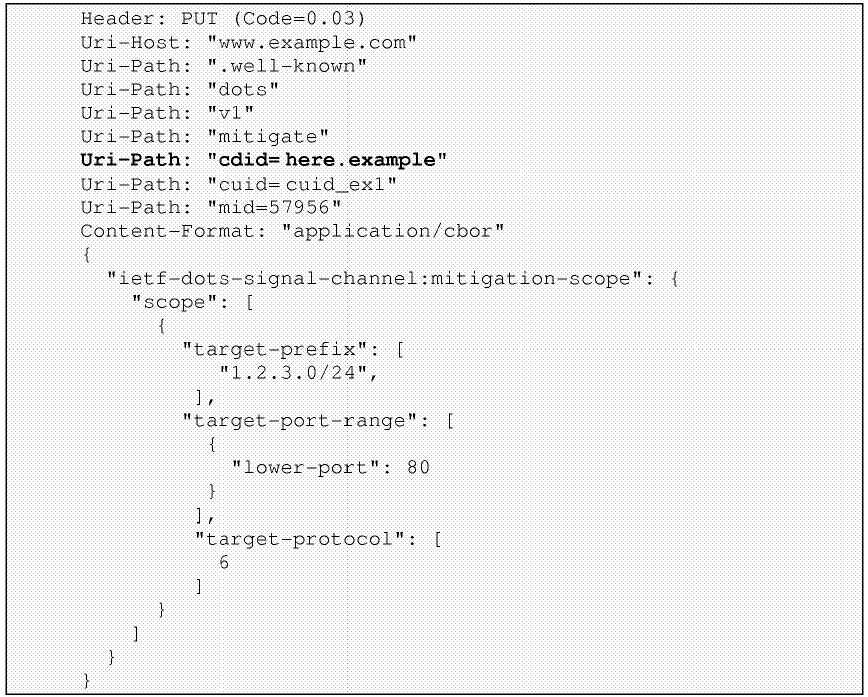

On présente maintenant en relation avec la Table 1 un exemple d'extrait d'une liste de clients DOTS telle que maintenue par un serveur. Les deux nœuds clients identifiés par « cuid_ex1 » et « cuid_ex2 » appartiennent au même domaine client identifié par « here.example ».

On notera que l'invention n'est pas limitée à une structure particulière de la table d'états maintenue par le serveur. Par exemple, un serveur peut indexer les clients par leurs identifiants, les grouper par domaine client, etc.

**Table 1**

| **Client Identifier (cuid)** | **Client Domain Identifier (cdid)** | ... |
|---|---|---|
| cuid_ex1 | here.example | ... |
| cuid_ex2 | here.example | ... |
| cuid_ex3 | there.example | ... |

Selon une première variante de réalisation de l'invention, le serveur répond en 35S au nœud client C1 avec un message de réponse MREPD ou « GET_Peer_Clients_Reply » comprenant une liste des identifiants des clients DOTS associés au domaine client ainsi que les informations utilisées (typiquement, l'adresse IP utilisée par un client DOTS) pour contacter le serveur. On notera que d'autres informations utiles à la détection et à la résolution de conflit peuvent être retournées par le serveur. Cette version du message de réponse « GET_Peer_Clients_Reply(List(cuid, IP address), [Additional_Information]) » est appelée réponse élaborée.

Cependant, ces informations peuvent être utilisées par un client DOTS malveillant pour découvrir les identifiants de tous les clients DOTS légitimes d'un domaine DOTS : le client malveillant pourrait ainsi exploiter ces informations pour perturber le service DOTS offert par ces clients.

Pour prévenir ces problèmes, une seconde variante consiste en ce que le serveur DOTS réponde par défaut en 35S avec le message GET_Peer_Clients_Reply(code de réponse, [Additional_Information]) pour communiquer le minimum d'informations au client demandeur. Cette version du message GET_Peer_Clients_Reply() est appelée réponse compacte.

Selon une première option, le serveur répond systématiquement avec la réponse compacte du GET_Peer_Clients_Reply(). La réponse compacte inclut un code de réponse CREP qui indique si d'autres clients sont connus du serveur. Typiquement :
- « 0 » : Est retourné au client demandeur si et seulement si seul le client demandeur est connu du serveur.
- «1»: Est retourné au client demandeur si d'autres clients DOTS correspondent au filtre indiqué dans la requête. Des informations supplémentaires comme le nombre de ces clients ou le nombre des états actifs qu'ils maintiennent peuvent être retournées.

Les informations de localisation ou d'identification des clients DOTS ne sont pas communiquées, et ce, afin de limiter d'autres formes d'usurpation d'identité par les clients malveillants.

En fonction du code indiqué dans la réponse, le client peut relancer une procédure de découverte au sein du domaine pour obtenir des informations supplémentaires.

Selon une deuxième option, et afin d'éviter que cette fonction de découverte ne soit exploitée par des clients malveillants, l'accès à une réponse élaborée comprenant des informations sensibles (telles que l'identité des clients ou leurs adresses IP) est réservée à des clients DOTS bénéficiant d'un certain privilège ou rôle. Ce rôle peut être attribué par l'administrateur du domaine client et partagé avec le serveur DOTS pendant la phase de souscription au service DOTS. Il peut être réservé à un ou plusieurs clients DOTS d'un domaine.

On désigne par clients DOTS maîtres (ou « Master DOTS Clients » en anglais), les clients choisis pour jouer ce rôle. Dans la suite, et à des fins d'illustration, on suppose que le rôle d'un client DOTS est déduit par le serveur par corrélation des informations présentées par le client DOTS pour son authentification auprès du serveur et d'informations préenregistrées par le serveur.

Ainsi le serveur DOTS répond avec la version élaborée du message « GET_Peer_Clients_Reply() » si et seulement si le client demandeur est un client DOTS maître. Sinon, la version compacte est renvoyée par défaut. Le serveur DOTS peut en outre être configuré pour ne retourner de réponse qu'à un ensemble défini de clients DOTS d'un domaine client; les requêtes provenant de clients n'appartenant pas à cet ensemble étant rejetées.

Grâce à cette procédure, les clients DOTS maîtres peuvent récupérer la liste des clients DOTS associés au domaine. Des informations supplémentaires qui caractérisent l'activité de ces clients sont à la disposition des clients DOTS maîtres.

Par défaut, dans un mode de fonctionnement sans client maître, tous les clients DOTS d'un domaine client jouent le même rôle et accèdent à la réponse élaborée.

Sur réception de la réponse MREPD en 36C, le client C1 vérifie en 37C si cette réponse correspond à une requête qu'il a envoyée et qui est en attente de réponse. Si la vérification s'est déroulée avec succès, le client récupère en 38C les informations incluses dans le message ; sinon le message est rejeté en 39C.

En relation avec la Figure 3C, on suppose que le client qui fait la découverte est un client maître Cm. S'il n'a pas obtenu toutes les informations relatives aux ressources associées aux nœuds clients dans la réponse MREPD reçue du serveur S, il peut, dès lors qu'il a récupéré la liste des identifiants des clients actifs dans le domaine, adresser au serveur S une requête supplémentaire MREQRk ou « GET(c3, all) » pour demander le rapatriement de la liste des entrées de filtrage, de ressources IP enregistrées, etc., associées au client DOTS C3 du domaine.

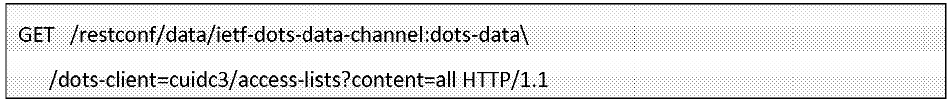

Ce message envoyé par le client maître Cm renseigne l'identifiant du client C3 et indique qu'il souhaite rapatrier toutes les données (opération et configuration) associées au client C3, comme le précise la valeur du paramètre « content » positionné à « all ».

Dès réception de ce message par le serveur DOTS, ce dernier renvoie la liste complète des ressources Rk associées au client C3.

En relation avec la Figure 4A, on détaille l'étape de découverte d'autres nœuds clients selon un deuxième mode de réalisation de l'invention, appelé mode « client-initiated-discovery ».

Selon ce mode de réalisation de l'invention, la découverte 21 comprend la réception de messages d'annonces de présence en provenance de clients DOTS du domaine client. Ces clients DOTS procèdent à l'annonce de leur présence soit lors de l'initialisation, soit à fréquence régulière, soit en réponse à une requête explicite. Notamment, les clients doivent annoncer leur présence sans attendre une sollicitation des autres clients DOTS du domaine au redémarrage et à chaque fois que leur(s) adresse(s) IP change(nt).

Ils procèdent également à la découverte des autres clients DOTS actifs au sein du domaine client. On suppose par exemple que le mode de transfert multicast est utilisé. En particulier, le protocole de résolution mDNS, tel que spécifié dans le document RFC 6762 peut être utilisé.

On suppose que le client DOTS C1 du domaine client souhaite découvrir les clients de son domaine à un instant donné. Selon ce mode de réalisation, comme illustré par la Figure 4A, il envoie une requête MRES à destination de l'une des adresses multicast définies par la RFC 6762 pour demander la résolution du nom "_dots._client.local.".

Dès réception de ce message par un autre client DOTS du domaine, par exemple le client C2, celui-ci répond en unicast ou en multicast en annonçant sa présence. Le message de réponse MPRES comprend les informations de localisation du client C2.

A l'issue de cette procédure, comme illustré par la Figure 4B, l'ensemble des clients DOTS du domaine sont identifiés et connus de tous les clients de ce domaine. Evidemment, les clients malveillants peuvent décider de ne pas participer à cette procédure d'annonce car elle pourrait révéler leur présence.

Une variante illustrée aussi par la Figure 4A consiste à découvrir d'abord les clients maîtres. Pour ce faire, un client DOTS envoie une requête MRES de résolution de nom de domaine de type PTR (pour « PoinTer Record », en anglais) à destination d'une adresse multicast définie par la RFC 6762 pour demander la résolution du nom "_dots._client_master.local.". Dès réception de ce message par autre client DOTS du domaine qui agit en tant que client DOTS maître, celui-ci doit répondre en multicast pour annoncer sa présence. Les informations de localisation sont incluses dans la réponse MPRES à la demande de résolution mDNS.

La réponse d'annonce est transmise au client C1 exclusivement en multicast pour éviter que des clients malveillants ne lui envoient des réponses erronées directement sur son adresse unicast.

Comme déjà évoqué précédemment, les clients maîtres doivent annoncer leur présence régulièrement et de manière spontanée, sans attendre une sollicitation émanant des autres clients.

A l'issue de cette procédure, le client C1 dispose des informations pour joindre au moins un client maître Cm du domaine.

Selon ce deuxième mode de réalisation de l'invention, la découverte comprend avantageusement une deuxième phase qui consiste pour le nœud client C1 à contacter le client maître Cm qu'il a découvert pour récupérer la liste complète des clients DOTS du domaine.

Avantageusement, le client DOTS C1 met en œuvre le premier mode de réalisation de l'invention et envoie le message de requête de découverte MREQD ou GET_Peer_Clients_Request() à destination d'un client maître qu'il a identifié lors de la première phase. Dès réception du message, le client maître répond avec un message MREPD ou GET_Peer_Clients_Reply() incluant la liste des autres clients DOTS actifs du domaine.

Comme illustré par la Figure 4B, une fois que tous les clients du domaine ont procédé à la découverte qui vient d'être décrite, ils disposent de la liste des clients actifs du domaine incluant ceux qui agissent en tant que client maître. Selon l'invention, ces informations sont ensuite exploitées par les clients pour détecter et résoudre des conflits liés à l'installation de règles de gestion du trafic incompatibles entre elles.

On décrit maintenant la détection 22 d'un conflit entre règles de gestion du trafic en relation avec les figures 5 et 6. Au moins deux cas sont envisagés :
- selon un troisième mode de réalisation de l'invention, le nœud client C1 détecte le conflit en 22 indépendamment de la découverte 21.
   En relation avec la Figure 5, on suppose qu'il a préalablement transmis en 51C une requête de traitement MREQT au serveur S. Cette requête concerne l'installation d'une règle de gestion de trafic Rk1. Sur réception de cette requête en 52S, le serveur S12 vérifie en 53S si cette demande d'installation de la règle Rk1 est compatible avec les règles de gestion déjà installées dans le domaine client. On suppose qu'il détecte un conflit avec une autre règle de gestion Rk2 et qu'il rejette la requête en 54₁S. Il répond alors au client C1 en 55₁S par un message MREPT comprenant un rejet de cette requête de traitement. La réponse MREPT indique l'existence du conflit avec la règle Rk2 installée par un autre client du même domaine client et spécifie un attribut rk2 identifiant cette règle Rk2. Si au contraire, il ne trouve pas d'incompatibilité entre la règle Rk1 et des règles déjà installées pour le même domaine client, il procède à l'installation de la règle Rk1 en 542S et transmet une réponse MREPT au client C1 en 5515 lui confirmant son installation.
   Selon un autre exemple, le client C1 a préalablement détecté un trafic caractéristique d'une attaque, et la demande de traitement MREQT comprend une demande de mitigation de cette attaque. Sur réception de cette requête en R2S, le serveur S détermine en 521S une solution de mitigation de cette attaque. On suppose qu'elle comprend l'installation d'au moins une règle de gestion Rk1. Les étapes suivantes déjà décrites sont inchangées.
   Sur réception en 56C du message de rejet MREPT, le client C1 obtient en 57C l'identifiant rk2 de la règle Rk2, mais il ne connaît pas l'identité du client qui l'a installée. Il déclenche donc l'étape de découverte 21 décrite ci-dessus, pour obtenir des informations sur les autres clients actifs dans le domaine client. Par exemple, il transmet en 58C une requête MREQD de découverte au serveur S. En variante, il met en œuvre une résolution d'adresse multicast pour découvrir un ou plusieurs clients maîtres Cm ;
- selon un quatrième mode de réalisation de l'invention illustré par la Figure 6, la détection 22 d'un conflit entre règles de gestion du trafic associé au domaine client est réalisée en exploitant les informations relatives aux autres clients, et obtenues lors de la découverte 21. Par exemple, le nœud client C1 reçoit le message de réponse MREPD du serveur S 12 en 60C, extrait les informations d'identification, de localisation et d'état reçues pour chacun des nœuds clients enregistrés auprès du serveur S et les compare en 61C à des informations localement stockées en mémoire M1. Par « informations disponibles localement », on désigne les informations d'identification, de localisation, d'activité déjà enregistrées pour les nœuds clients du domaine, les informations ou règles relatives à l'administration et à la politique de sécurité du domaine client. Le nœud client C1 exploite cette comparaison pour détecter par exemple en 62C un conflit entre une deuxième règle Rk2 installée par un client C2 et une première règle liée à la politique de sécurité de gestion du trafic dans le domaine client.

On comprend que les informations reçues lors de la découverte doivent concerner tous les nœuds clients actifs dans le domaine client, y compris les nœuds malveillants, et être suffisamment complètes et notamment inclure les entrées relatives à des règles de gestion installées (règles de filtrage, demandes de mitigation, etc.) par les clients découverts et maintenues par le serveur. De la sorte, le client maître peut identifier le client qui a installé une règle de gestion particulière.

Ce mode de réalisation est donc particulièrement adapté à un nœud client maître Cm et à une découverte en mode « server-assisted ». En effet, la procédure locale « client-initiated-discovery » ne permet pas de conclure quant à la présence de clients DOTS malveillants au sein d'un domaine client car ceux-ci peuvent être programmés pour ignorer les sollicitations envoyées par les autres clients du domaine.

Avantageusement, les informations de découverte sont ensuite exploitées en 22 pour :
o Identifier la présence de clients DOTS malveillants (ou clients DOTS « cachés ») activés au sein du domaine DOTS. Il s'agit par exemple d'un client qui n'est pas censé se connecter au serveur, mais pour lequel le serveur garde une session active ;
o Identifier la présence de clients DOTS malveillants activés depuis un réseau externe au domaine client DOTS. Cette anomalie est facilement détectable sur la base de l'adresse IP utilisée par le client DOTS pour établir une session DOTS. Cette adresse n'est pas une adresse usurpée car l'établissement d'une session DOTS repose sur des acquittements envoyés par les agents DOTS dans le cadre de la procédure d'authentification mutuelle ;
o Identifier les clients DOTS ayant une activité suspecte. Par exemple, c'est le cas d'un client DOTS ayant installé des règles de gestion du trafic non conformes aux politiques locales au domaine client, c'est-à-dire en conflit avec des règles locales d'administration ou de sécurité du domaine client ;

o Identifier des clients DOTS dits « amnésiques », c'est-à-dire des clients DOTS ayant installé des états mais qui ne se soucient pas de les supprimer auprès du serveur DOTS. Il s'agit par exemple de règles de gestion qu'ils ont installées mais pas supprimées. Il peut s'agir aussi d'une demande de mitigation toujours en cours, mais sans durée de vie associée.

On détaille maintenant la résolution 23 d'un conflit détecté en relation avec les figures 7A à 7C.

Selon le troisième mode de réalisation de l'invention, on considère le cas où la détection de conflits 22 réalisée à partir des informations issues de la découverte, a amené le client C1 à identifier un client C3 malveillant ou amnésique.

Avantageusement, le client C1 est un client maître Cm qui bénéficie de privilèges, parmi lesquels celui de demander au serveur de modifier l'état d'un autre nœud client du domaine client 11.

Par exemple, l'action 24 engagée consiste à :
- Supprimer une ou plusieurs entrées associées à un client DOTS : Le client DOTS maître a détecté que bien que maintenues par le serveur pour le client C3, elles sont erronées. En relation avec la Figure 7A, une requête MREQS ou DELETE(C3, rk2) de suppression de la ou les règles Rk2 correspondant à ce(s) entrées associées au client C3 est transmise par le client maître Cm au serveur S. Une telle requête renseigne l'identifiant du client C3 et précise que toutes les entrées qui lui sont associées doivent être supprimées. Par exemple, le message DELETE peut être formaté comme suit :

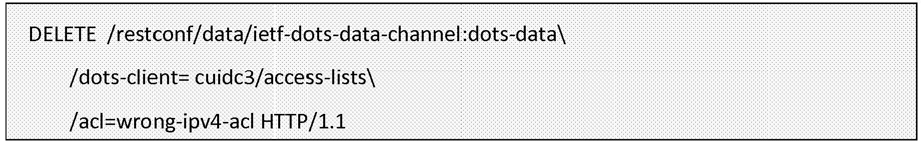

Dès réception de ce message, le serveur supprime la règle de filtrage RK2 = « wrong-ipv4-acl » associé au client C3. Les problèmes liés aux entrées dites « stale » peuvent être résolus en mettant en œuvre cette procédure.
- Déconnecter un client DOTS détecté comme inactif, pour lesquels des règles de gestion, donc périmées (parce que le client est inactif) restent installées au sein du domaine. En relation avec la Figure 7B, une requête de suppression MREQS ou DELETE(C3, all) du client C3 est transmis par le client maître Cm au serveur S. Il renseigne l'identifiant du client C3 et précise que toutes les ressources qui lui sont associées doivent être supprimées. Par exemple, le message DELETE peut être formaté comme suit : 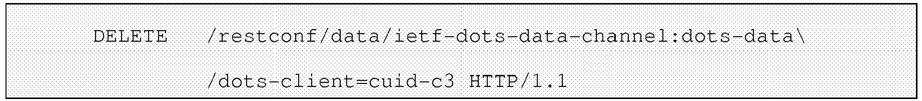 Dès réception de ce message, le serveur déconnecte le client C3. Il en résulte qu'aucune entrée n'est plus maintenue par le serveur pour ce client.
- migrer une ou plusieurs entrées associées à un client DOTS avant de le déconnecter :
   si par ailleurs, le client maître identifie, parmi les règles de gestion installées par le client C3 et maintenues par le serveur, des entrées qu'il convient de maintenir, malgré la déconnexion du client C3, le client maître Cm peut demander au serveur de migrer ces entrées vers un ou plusieurs autres clients du domaine. Un autre cas d'usage est par exemple celui d'une procédure de mise à jour logicielle majeure du nœud client C3, pendant laquelle tout ou partie des entrées correspondant à des règles de gestion installées par le client C3 doivent être maintenues par un client dit « de secours » (pour « backup », en anglais). Avantageusement, la migration peut être mise en œuvre grâce à une nouvelle procédure de mise à jour reposant sur la méthode PUT. On présente ci-dessous un premier exemple de réalisation d'une demande de migration de toutes les règles instanciées initialement par le client C3 vers le client C2 : 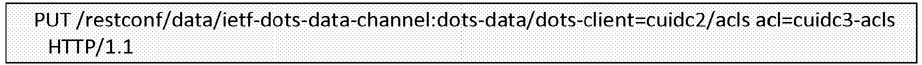 Un autre exemple de la réalisation de la procédure de migration est la suppression des règles à migrer à l'aide d'une requête de suppression MRES ou DELETE telle que décrite précédemment, puis l'envoi immédiat de requête(s) PUT/POST pour la création de ces mêmes règles mais associées à un nouvel identifiant de client (c2).
- inscrire le client DOTS sur une liste noire (en anglais, « black list »), en transmettant un message « BLACKLIST(C3) » au serveur S, comme illustré par la Figure 7C ;
   Le message BLACKLIST() envoyé par le client Cm comprend un identifiant du client C3, par exemple de type cuid. Dès réception de ce message, le serveur S supprime l'ensemble des états associés au client C3 et ajoute C3 à une liste noire. Il en résulte qu'aucun état n'est plus maintenu par le serveur pour ce client et qu'il ne pourra plus établir de session DOTS avec le serveur. Ses demandes d'établissement de sessions seront systématiquement rejetées par le serveur DOTS.

Avantageusement, le client maître DOTS peut réitérer le procédé selon l'invention jusqu'à ce que toutes les anomalies soient résolues.

Selon le quatrième mode de réalisation de l'invention, on considère le cas d'un client C1 qui détecte un conflit entre règles de gestion, sur réception d'un refus du serveur S de traiter sa demande MREQT, comme décrit en relation avec la Figure 5. Avantageusement, la réponse MREPT reçue en 56C lui peut lui indiquer un identifiant rk2 de la règle de gestion Rk2 à l'origine du conflit avec la règle Rk1 qu'il souhaitait installer. L'inclusion de cet identifiant dans le message de refus du serveur S n'est pas obligatoire pour déclencher la procédure de résolution de conflit.

De façon alternative, le client C1 utilise les informations (par exemple les préfixes IP) envoyées dans la réponse du serveur pour identifier la règle Rk2 à l'origine du conflit.

On suppose que le client C1 a identifié les autres clients actifs dans le domaine au cours d'une découverte 22, mais qu'il ne sait pas auquel d'entre eux associer la règle de gestion Rk2 qui pose problème, par exemple parce qu'il ne dispose pas de ce type d'informations sur les autres nœuds clients.

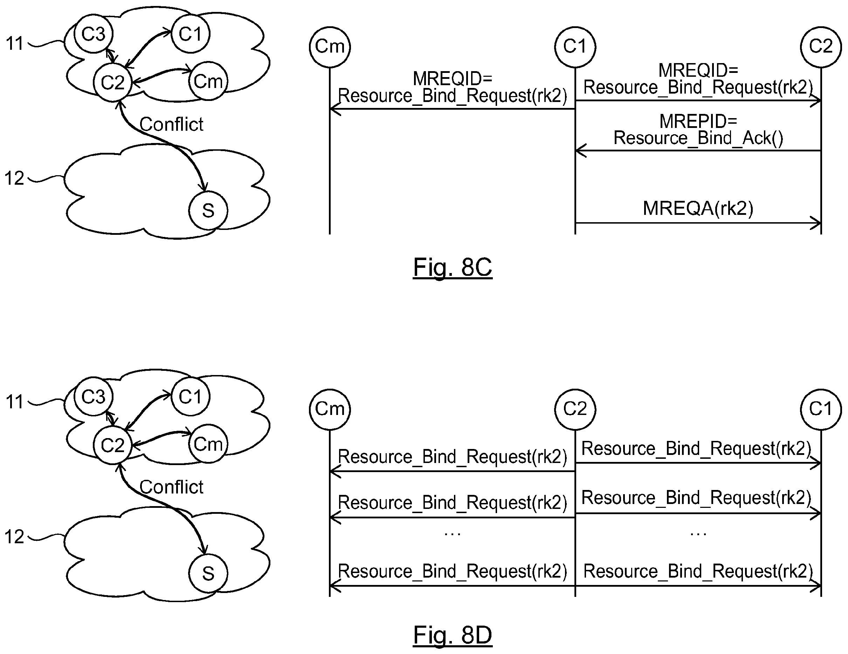

Pour résoudre le conflit, le nœud client C1 doit identifier le client du domaine qui a installé la règle Rk2 correspondant à l'identifiant rk2. S'il n'a pas obtenu suffisamment d'informations lors de la découverte, le client C1 sollicite l'assistance des clients du domaine qu'il a découverts. A titre d'exemple, il peut adopter l'un des comportements suivants :
- Contacter un client maître du domaine, comme illustré par la Figure 8A ;
- Contacter tous les clients du domaine en multicast, comme illustré par la Figure 8B ;
- Contacter tous les clients du domaine en utilisant les adresses unicast découvertes lors des étapes précédentes, comme illustré par la Figure 8C.

En relation avec la Figure 9A, le client C1 envoie aux clients du domaine une requête de détermination MREQID ou « Resource_Bind_Request(rk2), spécifiant la règle de gestion Rk2 concernée par un attribut rk2. Cet attribut est par exemple un préfixe IP, un nom de domaine, une règle de filtrage, etc. Une ou plusieurs règles de gestion peuvent être indiquées dans une requête.

On distingue deux cas :
Cas 1: Au moins un client du domaine, par exemple le client C2 ou le client maître Cm, est responsable de la règle de gestion Rk2 ou connaît l'identité du client associé à cette règle. Il répond par un message MREPD ou « Resource_Bind_Ack(ci) », en indiquant au moins l'identifiant ci du client concerné Ci. A titre d'exemple, le client C1 consulte ensuite la table des clients actifs qu'il maintient pour en déduire l'adresse IP associée à l'identifiant ci obtenu.

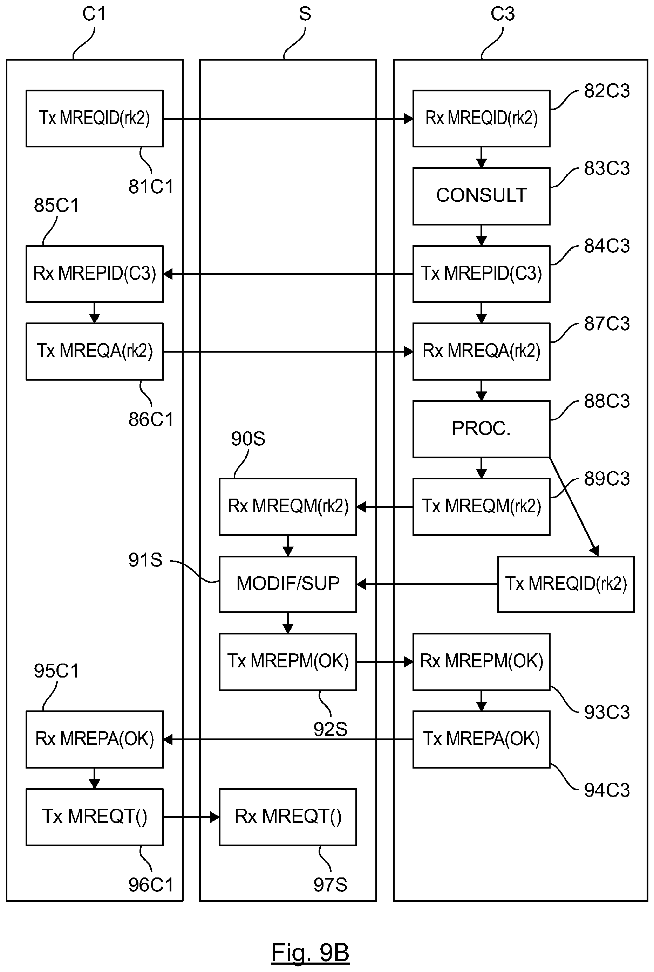

Dans la suite on suppose que le client C3 est responsable de la règle de gestion Rk2. On détaille les échanges entre le client C1 et le client C3, en relation avec la Figure 9B. En vue d'identifier le client du domaine client qui a installé la règle Rk2, le client C1 transmet en 81C1 un message MREQID(rk) de requête d'identification du client ayant installé la règle Rk2. Le message est reçu par le client C3 en 82C3. Il consulte ses tables et vérifie qu'il a installé lui-même cette ressource Rk2 en 83C3. Il répond au client C1 en 84C3 par un message MREPID comprenant l'identifiant c3.

Le client C1 reçoit cette réponse en 85C1 et exploite les informations d'identification obtenues pour demander son assistance au client C3 en lui transmettant en 86C1 une requête d'ajustement de ressource MREQA ou « Resource_Adjust_Ack(rk2) ». Elle comprend au moins un attribut rk2 qui spécifie la ressource concernée Rk, ainsi que d'autres informations telles qu'une information relative à la nature du conflit ou une demande de modification de portée de la règle ou encore une proposition de résolution de conflit suggérée par le client C1. Dès réception de ce message en 87C3, le client C3 procède en 88C3 à des vérifications locales pour déterminer les actions requises pour résoudre le conflit. Par exemple, le client C3 peut, de façon non exhaustive :
- Demander au serveur en 89C3 de supprimer l'entrée correspondant à la règle Rk2 par un message de requête de suppression MREQS(rk2) ;
- Si la règle Rk2 est une règle de filtrage, demander au serveur d'en modifier la portée par un message de requête de modification MREQM(rk2).

On notera que le nœud client C3 peut décider de suivre la proposition de résolution proposée par le client C1 ou au contraire décider d'une autre action.

Le serveur S reçoit la requête en 90S, réalise les opérations de vérification habituelles non représentées et traite la requête en 91S. Il transmet en 92S une réponse MREPS ou MREPM confirmant le traitement. Une fois la confirmation reçue du serveur en 93C3, le client C3 répond au client C1 en 94C3 par un message MREPA ou « Resource_Adjust_Ack() » pour lui indiquer qu'il a fait le nécessaire pour résoudre le conflit. Le client C1, sur réception de la réponse de confirmation en 95C1, réémet en 96C1 sa demande de traitement MREQT à destination du serveur, qui pourra cette fois-ci la traiter avec succès.

Cas 2 : Comme illustré par la Figure 8D, aucune réponse n'est reçue à l'issue d'une période temporelle prédéterminée, malgré les réémissions répétées du message MREQID par le client C1. Cette absence de réponse et le fait que le client maître lui-même ne connaisse pas le client associé à cette ressource, sont révélateurs d'une anomalie dans la gestion du trafic du domaine, que le client maître Cm selon l'invention devrait pouvoir détecter et résoudre.

Avantageusement,_le client maître Cm du domaine procède aux actions nécessaires pour résoudre cette anomalie. Par exemple, il demande au serveur de supprimer la ressource Rk2 qui n'est associée à aucun client. En variante, s'il considère que la ressource en question doit être maintenue, il demande sa migration vers un client du domaine, comme précédemment évoqué.

Si la ressource est supprimée, le client C1 peut réémettre sa requête de traitement MREQT, initialement refusée, qui sera cette fois-ci honorée par le serveur. Si la ressource Rk2 a été réattribuée par le client maître Cm à un autre client du domaine client 11, il peut réitérer sa requête d'identification MREQID auprès des autres clients du domaine afin d'identifier le nouveau responsable, puis procéder selon le cas 1.

### 5.2 Structures

On présente finalement, en relation avec la figure 10, la structure simplifiée d'un nœud client et d'un serveur selon l'un des modes de réalisation décrits ci-dessus.

Selon un mode de réalisation particulier, un nœud client comprend une mémoire 101_{C} comprenant une mémoire tampon, une unité de traitement 102_{C}, équipée par exemple d'une machine de calcul programmable ou d'une machine de calcul dédiée, par exemple un processeur P, et pilotée par le programme d'ordinateur 103_{C}, mettant en œuvre des étapes du procédé de protection selon un mode de réalisation de l'invention.

A l'initialisation, les instructions de code du programme d'ordinateur 103_{C} sont par exemple chargées dans une mémoire RAM avant d'être exécutées par le processeur de l'unité de traitement 102_{C}.

Le processeur de l'unité de traitement 102_{C} met en œuvre des étapes du procédé de protection décrit précédemment, selon les instructions du programme d'ordinateur 103_{C}, pour :
- Découvrir au moins un autre nœud client dudit domaine client, dit nœud découvert ;
- Détecter un conflit entre au moins deux règles de gestion du trafic associé audit domaine client ; et
- Résoudre le conflit détecté, comprenant :
   o si une desdites règles a été installée par le nœud découvert, la modification de ladite règle ou d'un état associé audit nœud découvert ;
   o sinon, l'obtention, en provenance dudit nœud découvert, d'une information d'identification d'au moins le nœud du domaine client qui a installé une desdites règles.

Selon un mode de réalisation particulier, un serveur S ou un nœud client C2,C3,Cm comprend une mémoire 111_{S,C} comprenant une mémoire tampon, une unité de traitement 112_{S,C}, équipée par exemple d'une machine de calcul programmable ou d'une machine de calcul dédiée, par exemple un processeur P, et pilotée par le programme d'ordinateur 113_{S,C}, mettant en œuvre des étapes du procédé de protection selon un mode de réalisation de l'invention.

A l'initialisation, les instructions de code du programme d'ordinateur 113_{S,C} sont par exemple chargées dans une mémoire RAM avant d'être exécutées par le processeur de l'unité de traitement 112_{S}.

Le processeur de l'unité de traitement 112_{S,C} met en œuvre des étapes du procédé de protection décrit précédemment, selon les instructions du programme d'ordinateur 113_{S,C}, pour :
- recevoir une requête de découverte en provenance d'un nœud client du domaine client ;
- obtenir un enregistrement comprenant au moins un état associé à un autre nœud client du domaine, dit nœud enregistré ; et
- envoyer une réponse au nœud client comprenant au moins une information relative au nœud enregistré.

## Revendications

1. Procédé de protection d'un domaine client, mis en œuvre dans un nœud client du domaine client, ledit procédé comprenant :
- la découverte (21) d'au moins un autre nœud client dudit domaine client, dit nœud découvert ;
- la détection (22) d'un conflit entre au moins deux règles de gestion du trafic associé audit domaine client ; et
- la résolution (23) du conflit détecté, comprenant :
∘ si une desdites règles a été installée par un dit nœud découvert, la modification de ladite règle ou d'un état associé audit nœud découvert ;
∘ sinon, l'obtention, en provenance d'un dit nœud découvert, d'une information d'identification d'au moins un nœud du domaine client ayant installé une desdites règles ;
la détection et/ou la résolution dudit conflit utilisant des informations obtenues lors de la découverte dudit au moins un autre nœud du domaine client.

2. Procédé de protection d'un domaine client selon la revendication 1, **caractérisé en ce que** la découverte comprend l'émission d'au moins une requête de découverte et la réception d'une réponse.

3. Procédé de protection d'un domaine client selon la revendication 2, **caractérisé en ce que** la au moins une requête de découverte est transmise à un serveur accessible par les nœuds clients du domaine client.

4. Procédé de protection d'un domaine client selon l'une des revendications précédentes, **caractérisé en ce que** la découverte comprend la réception d'annonces de présence en provenance du nœud découvert sur une adresse multicast.

5. Procédé de protection d'un domaine client selon les revendications 2 et 4, **caractérisé en ce que** la requête de découverte est transmise à destination d'une adresse multicast ou d'un client préconfiguré, et **en ce que** les annonces de présence sont reçues en réponse à ladite requête.

6. Procédé de protection d'un domaine client selon la revendication 5, **caractérisé en ce que** l'adresse multicast est associée à un sous-ensemble des nœuds clients, dits clients maîtres, et **en ce que**, sur réception d'au moins une annonce de présence en provenance d'un nœud client maître dudit domaine, comprenant au moins une adresse IP unicast du nœud client maître, le procédé comprend l'envoi d'une deuxième requête de découverte des nœuds clients du domaine client à ladite au moins une adresse IP unicast du nœud client maître.

7. Procédé de protection d'un domaine client selon l'une des revendications précédentes, **caractérisé en ce que**, les informations obtenues lors de la découverte comprenant une liste de nœuds découverts et des informations relatives aux règles de gestion installées par les nœuds de la liste, la détection du conflit (23) comprend la comparaison (61C) des informations obtenues avec des informations disponibles localement et l'identification dans ladite liste d'au moins le nœud découvert qui a installé une desdites règles.

8. Procédé de protection d'un domaine client selon la revendication 7, **caractérisé en ce que** la modification de ladite règle ou d'un état associé audit nœud découvert comprend l'envoi (64C) à un serveur d'une demande de modification de ladite règle ou d'un état associé audit nœud découvert.

9. Procédé de protection d'un domaine client selon l'une des revendications 1 à 6, **caractérisé en ce que** la détection du conflit (22) comprend la réception (56C) d'un message de rejet d'une demande d'installation d'une desdites règles en provenance d'un serveur de gestion du trafic associé au domaine client, ledit message comprenant un identifiant de l'autre dite règle de gestion (Rk2).

10. Procédé de protection d'un domaine client selon la revendication 9, **caractérisé en ce que**, si l'autre dite règle n'a pas été installée par le nœud découvert, la résolution du conflit (23) comprend l'émission (58C) d'une requête de détermination d'une identité du nœud client associé à l'autre dite règle de gestion à destination dudit nœud découvert.

11. Procédé de protection d'un domaine client selon la revendication 9, **caractérisé en ce que**, si l'autre dite règle a été installée par le nœud découvert, la modification de ladite règle comprend l'envoi (86C1) au nœud découvert d'une demande d'ajustement de ladite règle.

12. Nœud client (C1, Cm) comprenant au moins une machine de calcul programmable ou une machine de calcul dédiée, mettant en œuvre :
- la découverte d'au moins un autre nœud client dudit domaine client, dit nœud découvert ;
- la détection d'un conflit entre au moins deux règles de gestion du trafic associé audit domaine client ; et
- la résolution du conflit détecté, comprenant :
∘ si une desdites règles a été installée par un dit nœud découvert, la modification de ladite règle ou d'un état associé audit nœud découvert ;
∘ sinon, l'obtention, en provenance d'un dit nœud découvert, d'une information d'identification d'au moins un nœud du domaine client ayant installé une desdites règles ;
la détection et/ou la résolution dudit conflit utilisant des informations obtenues lors de la découverte dudit au moins un autre nœud du domaine client.

13. Réseau de communication comprenant un nœud client (C1, Cm) selon la revendication 12 et un serveur (S) ou un nœud client récepteur, ledit serveur (S) ou ledit nœud client récepteur comprenant au moins une machine de calcul programmable ou une machine de calcul dédiée mettant en œuvre :
- la réception (32S) d'une requête de découverte en provenance du nœud client (C1, Cm) du domaine client ;
- l'obtention (34S) d'un enregistrement comprenant au moins une information associée au nœud client récepteur ou à un autre nœud client du domaine ; et
- l'envoi (35S) d'une réponse au nœud client (C1, Cm) comprenant ladite au moins une information.

14. Produit programme d'ordinateur comprenant des instructions de code de programme pour la mise en œuvre d'un procédé selon l'une quelconque des revendications 1 à 11, lorsqu'il est exécuté par un processeur.

## Patentansprüche

1. Verfahren zum Schutz einer Client-Domäne, das in einem Client-Knoten der Client-Domäne implementiert ist, wobei das Verfahren Folgendes aufweist:
- das Auffinden (21) mindestens eines weiteren Client-Knotens der Client-Domäne, des sogenannten aufgefundenen Knotens;
- das Erkennen (22) eines Konflikts zwischen mindestens zwei Regeln für das Management des Verkehrs, der mit der Client-Domäne verbunden ist; und
- das Lösen (23) des erkannten Konflikts, das Folgendes aufweist:
o wenn eine der Regeln von einem der aufgefundenen Knoten installiert wurde, das Ändern der Regel oder eines mit dem aufgefundenen Knoten verbundenen Zustands;
o ansonsten das Erhalten von Identifikationsinformationen zu mindestens einem Knoten der Client-Domäne, der eine der Regeln installiert hat, von einem der aufgefundenen Knoten;
das Erkennen und/oder Lösen des Konflikts unter Verwendung von Informationen, die bei dem Auffinden des mindestens einen weiteren Knotens der Client-Domäne erhalten wurden.

2. Verfahren zum Schutz einer Client-Domäne nach Anspruch 1, **dadurch gekennzeichnet, dass** das Auffinden das Senden mindestens einer Auffindungsanforderung und das Empfangen einer Antwort aufweist.

3. Verfahren zum Schutz einer Client-Domäne nach Anspruch 2, **dadurch gekennzeichnet, dass** mindestens eine Auffindungsanforderung an einen Server übertragen wird, auf den die Client-Knoten der Client-Domäne zugreifen können.

4. Verfahren zum Schutz einer Client-Domäne nach einem der vorhergehenden Ansprüche, **dadurch gekennzeichnet, dass** das Auffinden das Empfangen von Anwesenheitsmeldungen aufweist, die von dem an einer Multicast-Adresse aufgefundenen Knoten stammen.

5. Verfahren zum Schutz einer Client-Domäne nach den Ansprüchen 2 und 4, **dadurch gekennzeichnet, dass** die Auffindungsanforderung an eine Multicast-Adresse oder einen vorkonfigurierten Client gesendet wird und dass die Anwesenheitsmeldungen als Antwort auf diese Anforderung empfangen werden.

6. Verfahren zum Schutz einer Client-Domäne nach Anspruch 5, **dadurch gekennzeichnet, dass** die Multicast-Adresse einer Untergruppe der Client-Knoten, den sogenannten Client-Master-Knoten, zugeordnet ist und dass beim Empfangen mindestens einer Anwesenheitsmeldung von einem Client-Master-Knoten der Domäne, die mindestens eine Unicast-IP-Adresse des Client-Master-Knotens enthält, das Verfahren das Senden einer zweiten Auffindungsanforderung von Client-Knoten der Client-Domäne an die mindestens eine Unicast-IP-Adresse des Client-Master-Knotens aufweist.

7. Verfahren zum Schutz einer Client-Domäne nach einem der vorhergehenden Ansprüche, **dadurch gekennzeichnet, dass** die bei dem Auffinden erhaltenen Informationen eine Liste der aufgefundenen Knoten und Informationen zu den von den Knoten der Liste installierten Management-Regeln aufweisen, wobei die Konflikterkennung (23) den Vergleich (61C) der erhaltenen Informationen mit lokal verfügbaren Informationen und die Identifizierung mindestens des aufgefundenen Knotens, der eine der Regeln installiert hat, in der Liste aufweist.

8. Verfahren zum Schutz einer Client-Domäne nach Anspruch 7, **dadurch gekennzeichnet, dass** das Ändern der Regel oder eines mit dem aufgefundenen Knoten verbundenen Zustands das Senden (64C) einer Anfrage zur Änderung der Regel oder eines mit dem aufgefundenen Knoten verbundenen Zustands an einen Server aufweist.

9. Verfahren zum Schutz einer Client-Domäne nach einem der Ansprüche 1 bis 6, **dadurch gekennzeichnet, dass** das Erkennen des Konflikts (22) das Empfangen (56C) einer Ablehnungsnachricht auf eine Anfrage zur Installation einer der Regeln von einem mit der Client-Domäne verbundenen Server zum Management des Verkehrs aufweist, wobei die Nachricht eine Kennung der anderen Management-Regel (Rk2) aufweist.

10. Verfahren zum Schutz einer Client-Domäne nach Anspruch 9, **dadurch gekennzeichnet, dass**, wenn die andere Regel nicht von dem aufgefundenen Knoten installiert wurde, das Lösen des Konflikts (23) das Senden (58C) einer Anfrage zur Bestimmung einer Identität des mit der anderen Management-Regel verbundenen Client-Knotens an den aufgefundenen Knoten aufweist.

11. Verfahren zum Schutz einer Client-Domäne nach Anspruch 9, **dadurch gekennzeichnet, dass**, wenn die andere Regel durch den aufgefundenen Knoten installiert wurde, das Ändern der Regel das Senden (86C1) einer Anfrage zur Anpassung der Regel an den aufgefundenen Knoten aufweist.

12. Client-Knoten (C1, Cm) mit mindestens einer programmierbaren Rechenmaschine oder einer dedizierten Rechenmaschine, die Folgendes ausführt:
- das Auffinden mindestens eines weiteren Client-Knotens der Client-Domäne, des sogenannten aufgefundenen Knotens;
- das Erkennen eines Konflikts zwischen mindestens zwei Regeln für das Management des Verkehrs, der mit der Client-Domäne verbunden ist; und
- das Lösen des erkannten Konflikts, das Folgendes aufweist:
o wenn eine der Regeln von einem der aufgefundenen Knoten installiert wurde, das Ändern der Regel oder eines mit dem aufgefundenen Knoten verbundenen Zustands;
o ansonsten das Erhalten von Identifikationsinformationen zu mindestens einem Knoten der Client-Domäne, der eine der Regeln installiert hat, von einem der aufgefundenen Knoten;
das Erkennen und/oder Lösen des Konflikts unter Verwendung von Informationen, die bei dem Auffinden des mindestens einen weiteren Knotens der Client-Domäne erhalten wurden.

13. Kommunikationsnetz mit einem Client-Knoten (C1, Cm) nach Anspruch 12 und einem Server (S) oder einem empfangenden Client-Knoten, wobei der Server (S) oder der empfangende Client-Knoten mindestens eine programmierbare Rechenmaschine oder eine dedizierte Rechenmaschine aufweist, die Folgendes ausführt:
- das Empfangen (32S) einer Auffindungsanforderung vom Client-Knoten (C1, Cm) der Client-Domain;
- das Erhalten (34S) einer Aufzeichnung, die mindestens eine Information aufweist, die mit dem empfangenden Client-Knoten oder einem anderen Client-Knoten der Domäne verbunden ist; und
- das Senden (35S) einer Antwort an den Client-Knoten (C1, Cm), die mindestens eine Information enthält.

14. Computerprogrammprodukt, das Programmcodeanweisungen aufweist, die bei seiner Ausführung durch einen Prozessor das Verfahren nach einem der Ansprüche 1 bis 11 durchführen.

## Claims

1. Method for protecting a client domain, implemented in a client node of the client domain, said method comprising:
- discovering (21) at least one other client node of said client domain, referred to as a discovered node;
- detecting (22) a conflict between at least two rules for managing the traffic which is associated with said client domain; and
- resolving (23) the detected conflict, comprising:
∘ if one of said rules was installed by a said discovered node, modifying said rule or a state associated with said discovered node;
∘ otherwise, obtaining, from a said discovered node, an item of information for identifying at least one node of the client domain having installed one of said rules;
the detection and/or the resolution of said conflict using items of information obtained when the at least one other node of the client domain is discovered.

2. Method for protecting a client according to Claim **1, characterized in that** the discovery comprises transmitting at least one discovery request and receiving a response.

3. Method for protecting a client domain according to Claim 2, **characterized in that** the at least one discovery request is transmitted to a server which can be accessed by the client nodes of the client domain.

4. Method for protecting a client domain according to one of the preceding claims, **characterized in that** the discovery comprises receiving presence announcements from the discovered node on a multicast address.

5. Method for protecting a client domain according to Claims 2 and 4, **characterized in that** the discovery request is transmitted to a multicast address or a preconfigured client, and **in that** the presence announcements are received in response to said request.

6. Method for protecting a client domain according to Claim 5, **characterized in that** the multicast address is associated with a subset of the client nodes, which are referred to as master clients, and **in that**, upon receipt of at least one presence announcement from a master client node of said domain, comprising at least one unicast IP address of the master client node, the method comprises sending a second discovery request from the client nodes of the client domain to said at least one unicast IP address of the master client node.

7. Method for protecting a client domain according to one of the preceding claims, **characterized in that**, since the items of information obtained during the discovery comprise a list of discovered nodes and items of information relating to the management rules installed by the nodes of the list, detecting the conflict (23) comprises comparing (61C) the obtained items of information with locally available items of information and identifying, in said list, at least the discovered node which installed one of said rules.

8. Method for protecting a client domain according to Claim 7, **characterized in that** modifying said rule or a state associated with said discovered node comprises sending (64C), to a server, a request to modify said rule or a state associated with said discovered node.

9. Method for protecting a client domain according to one of Claims 1 to 6, **characterized in that** detecting the conflict (22) comprises receiving (56C) a message rejecting a request to install one of said rules from a server for managing the traffic associated with the client domain, said message comprising an identifier of the other said management rule (Rk2).

10. Method for protecting a client domain according to Claim 9, **characterized in that**, if the other said rule was not installed by the discovered node, resolving the conflict (23) comprises transmitting (58C) a request to determine an identity of the client node associated with the other said management rule to said discovered node.

11. Method for protecting a client domain according to Claim 9, **characterized in that**, if the other said rule was installed by the discovered node, modifying said rule comprises sending (86C1), to the discovered node, a request to adjust said rule.

12. Client node (C1, Cm) comprising at least one programmable computing machine or a dedicated computing machine, implementing:
- discovering at least one other client node of said client domain, referred to as a discovered node;
- detecting a conflict between at least two rules for managing the traffic which is associated with said client domain; and
- resolving the detected conflict, comprising:
∘ if one of said rules was installed by a said discovered node, modifying said rule or a state associated with said discovered node;
∘ otherwise, obtaining, from a said discovered node, an item of information for identifying at least one node of the client domain having installed one of said rules;
the detection and/or the resolution of said conflict using items of information obtained when the at least one other node of the client domain is discovered.

13. Communication network comprising a client node (C1, Cm) according to Claim 12 and a server (S) or a receiving client node, said server (S) or said receiving client node comprising at least one programmable computing machine or a dedicated computing machine implementing:
- receiving (32S) a discovery request from the client node (C1, Cm) of the client domain;
- obtaining (34S) a record comprising at least one item of information associated with the receiving client node or with another client node of the domain; and
- sending (35S) a response to the client node (C1, Cm) comprising said at least one item of information.

14. Computer program product comprising program code instructions for implementing a method according to any one of Claims 1 to 11 when it is executed by a processor.
